(19) Europäisches Patentamt
European Patent Office
Office européen des brevets

(11) **EP 3 200 122 B1**

(12) **EUROPÄISCHE PATENTSCHRIFT**

(45) Veröffentlichungstag und Bekanntmachung des Hinweises auf die Patenterteilung:
**22.06.2022 Patentblatt 2022/25**

(21) Anmeldenummer: **16152709.8**

(22) Anmeldetag: **26.01.2016**

(51) Internationale Patentklassifikation (IPC):
*F16P 3/14* (2006.01)    *H04N 13/239* (2018.01)
*H04N 13/271* (2018.01)    *G06V 20/52* (2022.01)
*G06V 20/64* (2022.01)

(52) Gemeinsame Patentklassifikation (CPC):
**H04N 13/271; F16P 3/142; G06V 20/52; G06V 20/64; H04N 13/239**

(54) **OPTOELEKTRONISCHER SENSOR UND VERFAHREN ZUR SICHEREN ERKENNUNG VON OBJEKTEN EINER MINDESTGRÖSSE**

OPTOELECTRONIC SENSOR AND METHOD FOR SECURE DETECTION OF OBJECTS OF AT LEAST A CERTAIN SIZE

CAPTEUR OPTOELECTRONIQUE ET PROCEDE DE RECONNAISSANCE FIABLE D'OBJETS DE TAILLE MINIMUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.08.2017 Patentblatt 2017/31**

(73) Patentinhaber: **SICK AG**
**79183 Waldkirch (DE)**

(72) Erfinder: **Braune, Ingolf**
**79194 Gundelfingen (DE)**

(56) Entgegenhaltungen:
**EP-A2- 2 426 576    EP-A2- 2 708 981**

**Beschreibung**

Die Erfindung betrifft einen optoelektronischen Sensor und ein Verfahren zur sicheren Erkennung von Objekten einer Mindestgröße nach dem Oberbegriff von Anspruch 1 beziehungsweise 13.

Ein gattungsgemäßer Sensor nimmt ein Bild eines Überwachungsbereichs auf, um darin Objekte zu erfassen und zu bewerten. Dazu genügt grundsätzlich eine übliche Kamera, vornehmlich befasst sich die nachfolgende Beschreibung jedoch mit 3D-Sensoren. Dazu zählen zunächst 3D-Kameras in unterschiedlichen Technologien, beispielsweise Stereoskopie, Triangulation, Lichtlaufzeit, mit Auswertung der Störung passiver zweidimensionaler Muster oder von projizierten Beleuchtungsmustern. Solche 3D-Sensoren nehmen im Gegensatz zu einer üblichen zweidimensionalen Kamera Bilder auf, die in ihren Pixeln einen Abstandswert enthalten. Diese tiefenaufgelösten oder dreidimensionalen Bilddaten werden auch als Tiefenkarte bezeichnet. Weiterhin bekannt sind in zwei oder allen drei Richtungen abtastende Laserscanner, die über die jeweiligen Abtastwinkel und die gemessene Entfernung ebenfalls dreidimensionale Bilddaten erfassen. Der im Vergleich zu einer zweidimensionalen Bilderfassung höhere Geräte- und Auswertungsaufwand zur Erzeugung von dreidimensionalen Bilddaten wird in vielen Anwendungen durch die Zusatzinformationen gerechtfertigt.

Ein spezielles Anwendungsfeld ist die Sicherheitstechnik, wo der Sensor als Schutzeinrichtung eingesetzt wird, um einen als kritisch eingestuften Zustand innerhalb des überwachten Raumes zu erkennen, der dann zu einer Warnung oder einer Absicherung einer Gefahrenstelle führt. Die Sicherheitstechnik stellt besondere Anforderungen, weil von der Funktionsfähigkeit des Sensors Gesundheit oder gar Leben von Personen abhängt.

Ganz besonders in der Sicherheitstechnik, prinzipiell aber bei jeglicher optischer Überwachung sind Bildfehler problematisch, weil der Sensor dadurch partiell blind wird. Deshalb werden große Anstrengungen unternommen, ein hochwertiges Bild als Ausgangspunkt zu erhalten. Ein einfaches Beispiel für einen derartigen Bildfehler ist eine lokale Übersteuerung durch einen Glanzreflex.

Speziell bei Stereokameras wird eine aktive Beleuchtung eingesetzt, die ein Muster in den Überwachungsbereich projiziert, das unabhängig von der Szenerie für eine verlässliche Struktur sorgen soll. Das Ziel ist, mit unterschiedlichen Algorithmen sogenannte dichte Tiefenkarten zu erzielen, also solche Tiefenkarten, die möglichst in allen Pixeln einen gültigen Entfernungswert enthalten. Der jeweilige Algorithmus versucht, das Muster in einem Fenster des einen Bildes im anderen Bild entlang des Disparitätsbereichs wiederzufinden. Das gelingt auch in der Regel sehr gut. Dennoch kann die Disparität manchmal nicht oder jedenfalls nicht mit ausreichender Zuverlässigkeit bestimmt werden. Das liegt dann beispielsweise an einer ungenügenden Qualität der Musterelemente im Bild, etwa wegen ungünstiger Remissionseigenschaften der jeweiligen Oberfläche in der Szenerie, wodurch es zum Verlust von Musterstrukturen kommt, die aber die Voraussetzung für die Korrelation sind. In derartigen Fällen ist der jeweilige Tiefenwert nicht bestimmbar, und es verbleibt ein Bildfehler, ein sogenanntes Loch in der Tiefenkarte.

Aus einer sicherheitstechnischen Sicht müssen solche Löcher zunächst vorsichtshalber als mögliche Objekte oder Objektbestandteile betrachtet werden. Das kann aber die Verfügbarkeit empfindlich herabsetzen, weil sicherheitsgerichtete Abschaltungen durch Löcher und keine echten Objekte ausgelöst werden.

In sicherheitstechnischen Anwendungen wird typischerweise gefordert, dass ein Objekt mit bestimmten Mindestabmessungen sicher erkannt wird. Diese Eigenschaft wird als Detektionsvermögen bezeichnet. Solange mit einem relativ groben Detektionsvermögen gearbeitet wird, sind die zu detektierenden Objekte größer als die Löcher, und der einfache Ansatz, Löcher als Objekte oder Teile von Objekten zu behandeln, beeinträchtigt die Verfügbarkeit deshalb nicht. Ein grobes Detektionsvermögen führt allerdings zu großen Sicherheitsabständen und erschwert so eine Kooperation von Mensch und Maschine durch große Wegstrecken über den Tag. Es besteht deshalb der Wunsch nach einem feineren Detektionsvermögen, das dann erheblich geringere Sicherheitsabstände ermöglicht. Wenn wiederum eine leistungsfähigere Objekterkennung mit feinerem Detektionsvermögen die Löcher einfach als Objekt behandelt, so tritt der Einfluss von Fehldetektionen auf die Verfügbarkeit zu Tage, weil die Löcher sich nicht mehr anhand ihrer Größe von Objekten unterscheiden lassen.

In der EP 2 275 990 B1 wird eine doppelte Prüfung vorgenommen, nämlich ob es kritische Löcher oder zusammenhängende Pixelbereiche ohne Löcher gibt, die jeweils größer sind als das kleinste zu detektierende Objekt. Das bedeutet aber nichts anderes, als dass Löcher wie Objekte behandelt werden, mit den beschriebenen nachteiligen Einflüssen auf die Verfügbarkeit.

Die EP 2 819 109 A1 offenbart einen 3D-Sensor, der Objekte ab einer Mindestgröße in einem Detektionsfeld erkennt. Um die projektive Geometrie einer Stereokamera korrekt zu berücksichtigen, werden Bereiche der Tiefenkarte mit passend gewählten Schablonen verglichen. Auch hier werden aber Löcher wie Objekte behandelt, so dass das Spannungsverhältnis vermehrter Fehlabschaltungen bei höherem Detektionsvermögen erhalten bleibt.

Aus der EP 2 426 576 A2 ist eine Gestenerkennung bekannt. Es wird als zu aufwändig angesehen, das gesamte Bild auf relevante Gesten hin zu überwachen. Deshalb wird zunächst ein Gesicht erkannt. Relativ zu dem Bereich des Gesichts werden dann sogenannte Aktionsbereiche festgelegt, und nur in diesen Aktionsbereichen werden Gesten ausgewertet.

Es ist daher Aufgabe der Erfindung, das Detektionsvermögen eines gattungsgemäßen Sensors mit möglichst geringem Einfluss auf die Verfügbarkeit zu erhöhen.

Diese Aufgabe wird durch einen optoelektronischen Sensor und ein Verfahren zur sicheren Erkennung von Objekten einer Mindestgröße nach Anspruch 1 beziehungsweise 13 gelöst. Die Erfindung geht von dem Grundgedanken aus, dass kleine Objekte nur in räumlicher Nähe zu einem großen Objekt relevant sein können. Dazu erfolgt eine doppelte Auswertung der von einem Bildsensor erfassten Bilddaten mit einem feinen Detektionsvermögen und einem groben Detektionsvermögen. Als Zwischenergebnis werden sogenannte fein erfasste Objekte und grob erfasste Objekte erhalten. Fein erfasste Objekte, die nicht in einer Umgebung eines grob erfassten Objekts liegen, werden dann ignoriert. Es wird angenommen, dass solche isolierten fein erfassten Objekte Bildfehler sind.

Wie üblich bezeichnet das Detektionsvermögen eine beispielsweise in Millimetern angegebene Mindestgröße von Objekten, die sicher erfasst werden. Das erreichbare Detektionsvermögen hängt von der optischen Auflösung, aber auch von dem Auswertungsverfahren ab. Es sei angemerkt, dass natürlich eine Erfassung mit feinem Detektionsvermögen auch die großen Objekte der Erfassung mit grobem Detektionsvermögen ein zweites Mal aufdeckt. Insoweit erbringt die Erfassung mit feinem Detektionsvermögen keine neuen Aspekte. Die Erfindung zielt auf den Umgang mit kleinen Objekten, die nur als fein erfasste Objekte erkannt werden.

Die Erfindung hat den Vorteil, dass mit einem feineren Detektionsvermögen gearbeitet und Sicherheitsabstände darauf ausgelegt werden können. Durch das erhöhte Detektionsvermögen gibt es mehr kritische Stellen nicht nur wie erwünscht durch die so erst erkannten Objekte, sondern auch durch zusätzliche Bildfehler, die nicht mehr allein anhand ihrer Größe als solche ausgeschlossen werden. Durch die Erfindung bleibt die Systemverfügbarkeit hoch, weil kleine Fehldetektionen oder Störungen intelligent eliminiert werden. Dies erfolgt auf der Grundlage der Regel, dass relevante kleine Objekte im Personenschutz an das Vorhandensein einer Person in Umfeld gebunden sind.

Die Auswertungseinheit ist bevorzugt dafür ausgebildet, ein gemeinsames Objekt aus einem grob erfassten Objekt und den fein erfassten Objekten in dessen Umgebung zu bilden. Die fein erfassten Objekte werden also einem nahen grob erfassten Objekt zugeschlagen, wenn das möglich ist. Das entstehende Objekt oder eine umschreibende Kontur, etwa ein Rechteckt, wird dann als gemeinsames Objekt weiterbehandelt. Ein plastisches Beispiel ist ein Körper als grob erfasstes Objekt und eine in dessen Nähe befindliche Hand als fein erfasstes Objekt, die zusammengefasst werden.

Der Sensor ist vorzugsweise eine 3D-Kamera, die mit Hilfe ihres Bildsensors als Bilddaten eine Tiefenkarte erfasst. Die 3D-Kamera kann jede bekannte Technik wie beispielsweise Lichtlaufzeit- oder Lichtschnittverfahren verwenden. In dieser Beschreibung wird vor allem eine Stereokamera betrachtet, die entweder zwei Kamerabilder untereinander oder ein Kamerabild und ein bekanntes Projektionsmuster korreliert und Disparitäten schätzt. Gelingt die Korrelation in einem Bereich nicht, so entstehen Pixel ohne Tiefenwert oder Löcher. Auch bei den anderen 3D-Verfahren gibt es Effekte, die Löcher in den Tiefenkarten verursachen.

Das feine Detektionsvermögen ermöglicht bevorzugt eine Beinerkennung, eine Armerkennung, eine Handerkennung oder eine Fingererkennung und das grobe Detektionsvermögen eine Körpererkennung, eine Beinerkennung oder eine Armerkennung. Dabei können nicht alle Kombinationen gebildet werden, sondern nur solche, bei denen das feine Detektionsvermögen das kleinere Körperteil erkennt. Es kann also eine Ausführungsform geben, in der das grobe Detektionsvermögen eine Beinerkennung ermöglicht, während in einer anderen Ausführungsform erst das feine Detektionsvermögen Beine auflöst.

Das feine Detektionsvermögen beträgt bevorzugt 14 mm, 20 mm, 40 mm oder 55 mm und das grobe Detektionsvermögen 70 mm, 120 mm, 150 mm oder 200 mm. Die jeweilige Grenze zwischen fein und grob ist rein beispielhaft.

Die Auswertungseinheit legt bevorzugt beim Auffinden fein erfasster Objekte in der Umgebung eines grob erfassten Objekts zunächst eine umschreibende geometrische Form um das grob erfasste Objekt und bestimmt dann für die fein erfassten Objekte einen Suchbereich mit einem festgelegten Abstand um die geometrische Form als Umgebung. Der festgelegte Abstand wird auch als Suchradius bezeichnet. Durch die umschreibende geometrische Form wird das Vorgehen unabhängig von der konkreten Objektkontur, und die Umgebung kann sehr einfach über den festgelegten Abstand bestimmt werden. Beispielsweise ist die umschreibende geometrische Form ein Rechteck und der Suchbereich ein entsprechend dem festgelegten Abstand größeres, zentriert umgebendes Rechteck. Das überträgt sich auf andere Geometrien als ein Rechteck, wobei die umschreibende geometrische Form und der Suchbereich nicht zwingend die gleiche Geometrie haben müssen.

Die Auswertungseinheit legt alternativ beim Auffinden fein erfasster Objekte in der Umgebung eines grob erfassten Objekts eine Maske mit einer geometrischen Form mit der Größe eines festgelegten Abstands um jeden Bildpunkt des grob erfassten Objekts, und so bestimmt die Summe der Masken die Umgebung. Die Summe der Masken wird beispielsweise durch eine ODER-Verknüpfung in einer Binärkarte erhalten. Dies ist gewissermaßen ein lokaler Ansatz, der den Suchbereich bildpunktweise aufbaut, während das im vorigen Absatz erläuterte Vorgehen dies in einem Schritt anhand der umgebenden Form leistet. Dafür ist der lokal bestimmte Suchbereich genauer an die Objektkontur angepasst. Der festgelegte Abstand oder Suchradius für die Masken ist vorzugsweise untereinander gleich und entspricht auch demjenigen bei Bestimmung anhand einer umschreibenden Form.

Die geometrische Form ist vorzugsweise ein Kreis, ein Rechteck, ein Sechseck oder ein anderes Polygon. Die unterschiedlichen Formen haben jeweils Vorteile im Hinblick auf Verarbeitung und Genauigkeit.

Der festgelegte Abstand ist vorzugsweise aus den Sicherheitszuschlägen in Abhängigkeit vom Detektionsvermögen im Sinne sicherheitstechnischer Normen abgeleitet. Die derzeit relevanten Normen sind die ISO 13855 und die IEC 61496-4-3. Je nach rechtlichem Rahmen ist die entsprechende Norm eines anderen Landes oder ein Nachfolger heranzuziehen.

Der festgelegte Abstand ist bevorzugt aus der Differenz des Sicherheitszuschlags $C_1$ in Abhängigkeit des groben Detektionsvermögens minus den Sicherheitszuschlag $C_2$ in Abhängigkeit des feinen Detektionsvermögens abgeleitet. Die einschlägigen Normen geben die notwendigen Sicherheitsabstände an. Es lässt sich aber zeigen, dass es genügt, von den dort angegebenen Einflussgrößen nur die genannten Sicherheitszuschläge in Abhängigkeit vom Detektionsvermögen zu berücksichtigen, was die Berechnung erheblich vereinfacht.

Die Auswertungseinheit ist bevorzugt weiterhin dafür ausgebildet zu prüfen, ob ein erfasstes Objekt sich in einem vorgegebenen Schutzfeld oder zu nahe an einer Gefahrenstelle befindet und in diesem Fall ein sicherheitsgerichtetes Absicherungssignal über einen Sicherheitsausgang auszugeben. Erfasste Objekte sind nur noch grob erfasste Objekte oder fein erfasste Objekte in deren Umgebung, nicht mehr die erfindungsgemäß zuvor als Bildfehler erkannten isolierten fein erfassten Objekte. Befindet sich ein derartiges Objekt an einer gefährlichen Position, so muss für einen verlässlichen Personenschutz ein sicherheitsgerichtetes Absicherungssignal an einem Sicherheitsausgang (OSSD, Output Signal Switching Device) bereitgestellt werden.

Die Auswertungseinheit prüft vorzugsweise für das grobe und feine Detektionsvermögen unterschiedliche Schutzfelder, indem das Schutzfeld für das grobe Detektionsvermögen um eine Sicherheitserweiterung vergrößert ist. Auch mit dem erfindungsgemäßen Vorgehen ist eine klassische Schutzfeldauswertung möglich. Dabei werden jedoch große Objekte vorzugsweise in einem etwas größeren Schutzfeld gesucht. Ansonsten könnten fein erfasste Objekte am Rand nicht als isoliert ignoriert werden, obwohl es ein grob erfasstes Objekt in der Nähe gibt, jedoch außerhalb des Schutzfeldes für fein erfasste Objekte. Durch die Sicherheitserweiterung wird dies berücksichtigt. Kritisch sind dann nur Schutzfeldverletzungen im kleineren Schutzfeld des feinen Detektionsvermögens, so dass der Vorteil der kleineren Sicherheitsabstände erhalten bleibt. Die Sicherheitserweiterung berechnet sich vorzugsweise aus den Sicherheitszuschlägen für das feine und grobe Detektionsvermögen und insbesondere zu $r + C_1 - C_2$, wobei $r$ der oben genannte festgelegte Abstand für den Suchbereich ist, der festlegt, was als Umgebung eines grob erfassten Objekts gelten soll.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1     eine schematische dreidimensionale Darstellung einer 3D-Kamera;

Fig. 2     eine schematische Darstellung von grob und fein erfassten Objekten sowie deren erfindungsgemäße Zuordnung;

Fig. 3a    eine erläuternde Darstellung zur Größenerfassung eines Objekts anhand einer Zeilen- und Spaltenprojektion;

Fig. 3b    eine beispielhafte Darstellung eines grob erfassten Objekts mit umschreibendem Rechteck;

Fig. 3c    eine beispielhafte Darstellung des Suchbereichs um ein grob erfasstes Objekt;

Fig. 3d    eine beispielhafte Darstellung der Zusammenfassung eines grob erfassten Objekts mit den fein erfassten Objekten in seiner Umgebung;

Fig. 4     eine Darstellung einer alternativen Bestimmung der Umgebung anhand von lokalen Masken um die Bildpunkte eines grob erfassten Objekts; und

Fig. 5     eine Darstellung des Suchbereichs um ein grob erfasstes Objekt zur Illustration der Berechnung des Suchradius.

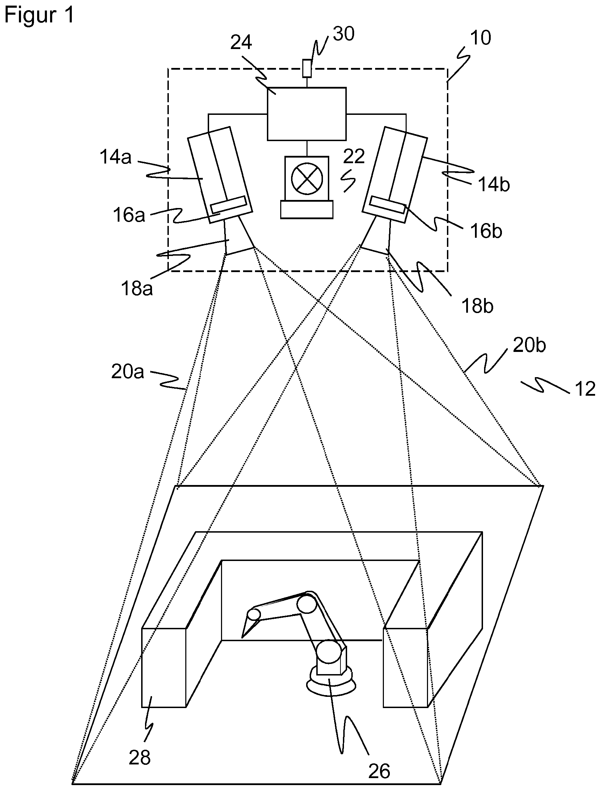

Figur 1 zeigt in einer schematischen dreidimensionalen Darstellung den allgemeinen Aufbau einer Stereokamera zur Aufnahme einer Tiefenkarte. Obwohl der dargestellte und im Folgenden beschriebene Sensor 10 eine Stereokamera ist, bleibt die Erfindung darauf nicht beschränkt. Die erfindungsgemäße Objekterfassung kann sich auf beliebige Bilderfassungen beziehen, insbesondere auch die einleitend genannten anderen 3D-Kameras mit Bestimmung der Lichtlaufzeit oder einer Auswertung der Störung passiver zweidimensionaler Muster oder von projizierten Beleuchtungsmustern sowie Laserscanner. Der dargestellte Sensor 10 ist für eine Aufnahme von oben montiert, was oft vorteilhaft ist und auch an manchen Stellen in dieser Beschreibung die Sprache der geometrischen Beziehungen prägt. Dennoch kann der Sensor 10 ebenso seitlich, unten oder in beliebiger sonstiger statischer oder mobiler Position und Orientierung angebracht sein.

Zur Erfassung eines Raumbereichs 12 sind zwei Kameramodule 14a, 14b in einem bekannten festen Abstand zueinander montiert und nehmen jeweils Bilder des Raumbereichs 12 auf. In jeder Kamera ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Die beiden Bildsensoren 16a, 16b bilden gemeinsam einen 3D-Bildsensor zur Erfassung einer Tiefenkarte. Den Bildsensoren 16a, 16b ist je ein Objektiv 18a, 18b mit einer abbildenden Optik zugeordnet, welche in der Praxis als jedes bekannte Abbildungsobjektiv realisiert sein können. Der maximale Sichtwinkel dieser Optiken ist in Figur 1 durch gestrichelte Linien dargestellt, die jeweils eine Sichtpyramide 20a, 20b bilden.

Zwischen den beiden Bildsensoren 16a, 16b ist eine Beleuchtungseinheit 22 vorgesehen, um den Raumbereich 12 mit einem strukturierten Muster auszuleuchten. Die dargestellte Stereokamera ist demnach für aktive Stereoskopie ausgebildet, bei der das Muster auch einer an sich strukturlosen Szenerie überall auswertbare Kontraste aufprägt. Alternativ ist keine oder eine homogene Beleuchtung vorgesehen, um die natürlichen Objektstrukturen im Raumbereich 12 auszuwerten, was aber regelmäßig zu zusätzlichen Bildfehlern führt.

Mit den beiden Bildsensoren 16a, 16b und der Beleuchtungseinheit 22 ist eine Steuer- und Auswertungseinheit 24 verbunden. Die Steuer- und Auswertungseinheit 24 kann in verschiedenster Hardware implementiert sein, beispielsweise einem externen Standardcomputer, internen digitalen Bausteinen wie Mikroprozessoren, ASICs (Application Specific Integrated Circuit), FPGAs (Field Programmable Gate Array), GPUs (Graphics Processing Unit) oder Mischformen davon. Da das Erzeugen der Tiefenkarte und deren Auswertung sehr rechenintensiv ist, wird vorzugsweise eine zumindest teilweise parallele Architektur gebildet.

Die Steuer- und Auswertungseinheit 24 erzeugt mit Hilfe der Beleuchtungseinheit 22 das strukturierte Beleuchtungsmuster und empfängt Bilddaten der Bildsensoren 16a, 16b. Aus diesen Bilddaten berechnet sie mit Hilfe einer stereoskopischen Disparitätsschätzung die dreidimensionalen Bilddaten beziehungsweise die Tiefenkarte des Raumbereichs 12. Der gesamte erfassbare Raumbereich 12 oder auch Arbeitsbereich kann über eine Konfiguration eingeschränkt werden, beispielsweise um störende oder nicht notwendige Bereiche auszublenden. Der verbleibende Arbeitsbereich wird als konfigurierter Arbeitsbereich bezeichnet.

Eine wichtige sicherheitstechnische Anwendung des Sensors 10 ist die Überwachung einer Gefahrenstelle 26, die in der Figur 1 durch einen Roboter symbolisiert ist. Oft werden dazu in dem konfigurierten Arbeitsbereich Schutzfelder 28 festgelegt, welche die Gefahrenstelle 26 wie eine virtuelle Wand absichern. Alternativ kennt die Steuer- und Auswertungseinheit 24 die Position der Gefahrenstelle 26 und prüft, ob sich ein unzulässiges Objekt innerhalb eines Sicherheitsabstands zu der Gefahrenstelle 26 befindet. Ein unzulässiger Eingriff in das Schutzfeld 28 oder ein zu nahe an der Gefahrenstelle 26 befindliches Objekt löst dann ein sicherheitsgerichtetes Absicherungssignal aus, welches über einen sicheren Ausgang 30 (OSSD, Output Signal Switching Device) ausgegeben wird, um beispielsweise den Roboter anzuhalten.

Der Sensor 10 ist in sicherheitstechnischen Anwendungen fehlersicher ausgelegt. Dies kann unter anderem bedeuten, dass der Sensor 10 sich selber, auch in Zyklen unterhalb der geforderten Ansprechzeit, testen kann, Defekte der Bildsensoren 16a-b oder der Beleuchtungseinheit 22 erkennt, oder dass die Steuerung 24, die Warn- oder Abschalteinrichtung 36 und/oder der Ausgang 30 sicher, beispielsweise zweikanalig ausgelegt sind beziehungsweise selbstprüfende Algorithmen verwenden. Derartige Vorschriften sind für allgemeine berührungslos wirkende Schutzeinrichtungen in der EN 61496-1 bzw. der IEC 61496 sowie in der DIN EN ISO 13849 und EN 61508 normiert. Eine entsprechende Norm für Sicherheitskameras befindet sich in der Vorbereitung. Durch die IEC/TS 61496-4-3 und die ISO 13855 sind auch die äußeren Grenzen der Schutzfelder 28 zur Werkerseite hinsichtlich des Abstandes zur Gefahrenstelle 26 definiert.

Einerseits soll nun der Sensor 10 Objekte mit einem feinen Detektionsvermögen erkennen, um entsprechende höhere Sicherheitsanforderungen wie Arm- oder gar Fingerschutz zu erfüllen und weil dann gemäß den Normen geringere Sicherheitsabstände genügen. Andererseits führt ein feineres Detektionsvermögen zu Fehlabschaltungen aufgrund von Löchern in den Tiefenkarten und damit einer verringerten Verfügbarkeit.

Die Erfindung löst diese doppelte Anforderung, Löcher korrekt als relevante Objekte zu handhaben und trotzdem verfügbar zu bleiben, aus der Überlegung, dass kleine Objekte, welche Hände und Arme verkörpern, nicht singulär im Raum auftreten können. Vielmehr muss ein großes Objekt, welches den Körper definiert, in einem räumlichen Zusammenhang mit dem kleinen Objekt stehen. Hierbei muss nicht notwendig ein direkter Zusammenhang, also ein einziges Objekt, vorhanden sein.

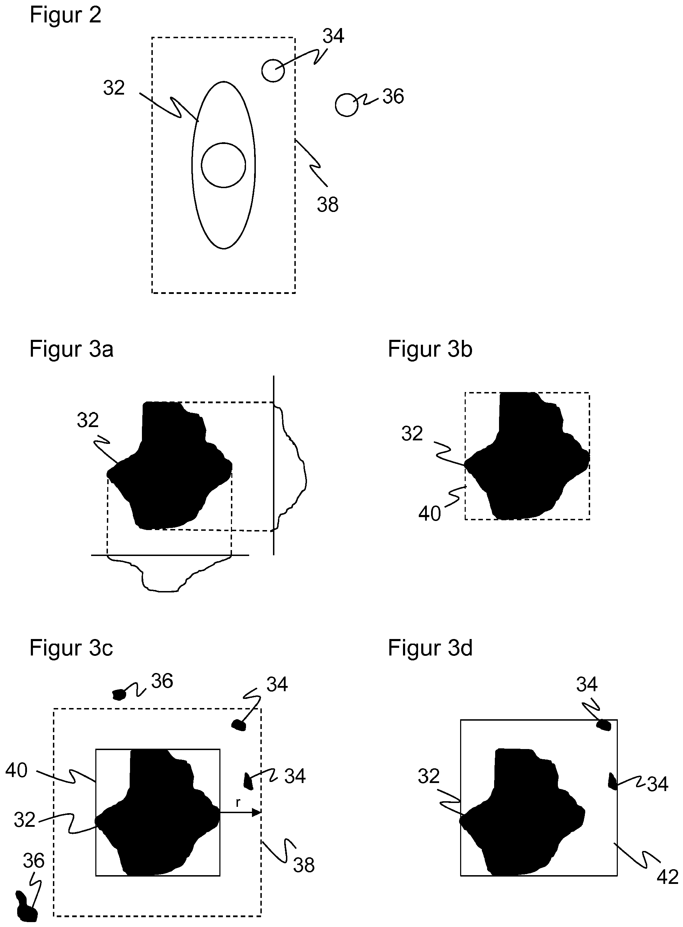

Figur 2 illustriert das Grundprinzip, nach dem kleine Objekte nur in räumlicher Nähe zu einem großen Objekt relevant sind. Konkret werden dazu die Objekte zweifach mit grobem und feinem Detektionsvermögen erfasst. Das Ergebnis sind grob erfasste Objekte 32 und fein erfasste Objekte 34, 36. Die Begrifflichkeiten beziehen sich auf die Erfassung, nicht unmittelbar auf die Objektgröße, und sind daher trotz starker Ähnlichkeit nicht ganz mit großen und kleinen Objekten identisch, weil beispielsweise ein großes Objekt natürlich erst recht mit einem feinen Detektionsvermögen erfasst wird. Zusätzlich zu den ohnehin sicherheitsrelevanten großen Objekten sind aber letztlich durch das feine Detektionsvermögen nur fein erfasste Objekte 34, 36 von Bedeutung, die mit dem groben Detektionsvermögen noch nicht aufgelöst werden konnten, und damit letztlich doch wieder kleine Objekte. Der begriffliche Unterschied verwischt sich daher.

In einem Umfeld 38 des großen Objekts 32 werden nun alle kleinen Objekte 34 dem großen Objekt 32 zugeschlagen und alle isolierten oder singulären kleinen Objekte 36 ignoriert. Alle singulären kleinen Objekte 36 können nur aus fehlerhaften Daten wie Löchern in der Tiefenkarte erkannt worden sein. Die sichere Anwesenheitserkennung wird oder bleibt dabei deaktiviert, obwohl eine alleinige Betrachtung des feinen Detektionsvermögens eine Auslösung erfordern würde. Es gibt in der Betrachtung des feinen Detektionsvermögens relevante Objekte 34 und irrelevante Objekte 36.

Anhand der Figuren 3a-3d soll im Anschluss eine entsprechende allgemeine Objektdetektion im Arbeitsbereich erläutert werden, in der ein Objekt erkannt, seine Position bestimmt und/oder seine Bewegungstrajektorie ermittelt werden soll.

In einem ersten Schritt wird der Raumbereich 12 oder der konfigurierte Arbeitsbereich einmal mit einem groben Detektionsvermögen und einmal mit einem feinen Detektionsvermögen untersucht. Das grobe Detektionsvermögen beträgt typischerweise 120-200 mm, das feine Detektionsvermögen 20 - 55 mm oder weniger, wobei die Grenze bei 55 mm verläuft. Das alles sind aber beispielhafte Werte, das Verfahren ist allgemein. Das Ergebnis dieser Untersuchung sind die Positionen der fein und grob detektierten Objekte etwa in Form von Binärkarten, welche alle Objekte verzeichnen, die in ihrer Größe das jeweilige Detektionsvermögen erreichen oder überschreiten. Ein denkbarer Algorithmus für diese Untersuchung mit jeweils vorgegebenem Detektionsvermögen und resultierenden Binärkarten wird in der einleitend schon genannten EP 2 819 109 A1 angegeben, auf die ergänzend verwiesen wird.

Wie in Figur 3a illustriert, wird dann zunächst die Binärkarte des groben Detektionsvermögens ausgewertet. Die gesetzten Bildpunkt der Binärkarte bezeichnen die grob erfassten Objekte 32. Eine einfache Methode, diese Objekte 32 zu clustern, ist die Bestimmung der horizontalen und vertikalen Projektion im lokalen Bereich. Dabei wird die Binärkarte bis zum ersten Objektelement abgesucht und anschießend mit dem zeilen- und spaltenweisen inkrementieren eines Zählers an dem jeweiligen Index begonnen. Dies wird zeilen- und spaltenweise solange fortgesetzt, bis keine Elemente der Binärkarte im Umfeld mehr gesetzt sind. Lücken können bis zu einem vorbestimmten Grad toleriert werden. Die erste und letzte gesetzte Position in den rechts und unten illustrierten Projektionen bilden die Außengrenzen des Objektes.

Figur 3b zeigt das mittels Spalten- und Zeilenprojektion erhaltene grob erfasste Objekt 32. Es wird demnach vereinfachend ein umschreibendes Rechteck 40 als das grob erfasste Objekt weiterbearbeitet. Mit aufwändigeren Verfahren kann auch die genauere Kontur oder eine andere umschreibende Basiskontur bestimmt werden, wie eine Ellipse oder dergleichen.

Figur 3c veranschaulicht, wie nun im Umfeld 38 des grob erfassten Objekts 32 beziehungsweise des umschreibenden Rechtecks 40 nach zugehörigen fein erfassten Objekten 34 gesucht wird. Dieser Bearbeitungsschritt erfolgt beispielsweise auf der Binärkarte des feinen Detektionsvermögens. In dieser Binärkarte sind die Objekte des feinen und des groben Detektionsvermögens verzeichnet. Dazu wird das Umfeld 38 bis zu einem Suchradius oder Abstand r untersucht, wobei die Berechnung von r unten noch genauer diskutiert wird. Die fein erfassten Objekte 34 innerhalb des Umfeldes 38 sind relevant, weil angenommen werden muss, dass sie zu dem grob erfassten Objekt 32 gehören. Fein erfasste Objekte 36 außerhalb des Umfelds 38 dagegen können als Fehldetektionen ignoriert werden.

In Figur 3d werden zur vereinfachten Weiterverarbeitung dem grob erfassten Objekt 32 die innerhalb des Umfelds 38 erkannten fein erfassten Objekte zugeschlagen. Die entstehende gemeinsame Kontur umfasst das gesamten Objekt mit allen relevanten Teilobjekten 32, 34. Aus den minimalen und maximalen Positionen der Objektpixel kann auch noch eine umschreibende Objektkontur 42 gebildet werden. Alle Betrachtungen zum Sicherheitsabstand, insbesondere dessen Unterschreitung und eines Feldeingriffs können nun auf Basis des feinen Detektionsvermögens und des gesamten Objekts oder der umschreibenden Objektkontur 42 erfolgen.

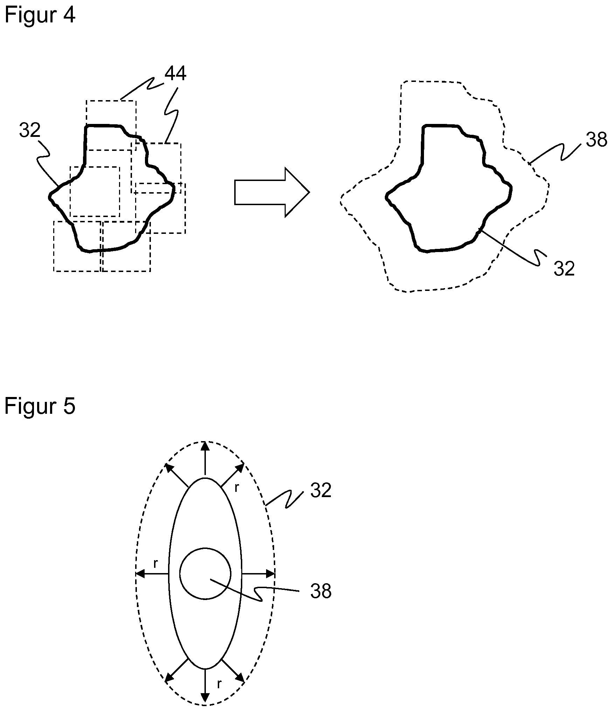

Unter Bezugnahme auf Figur 4 wird nun noch ein alternatives Vorgehen bei der Umgebungssuche auf Basis von Masken beschrieben. Erneut ist Ausgangspunkt eine Auswertung des groben Detektionsvermögens. Daraus sind alle Bildpunkte grob erfasster Objekte 32 bekannt, wobei Figur 4 zur besseren Darstellbarkeit nur die Außenkontur zeigt. Nun wird zumindest um die äußeren Objektbildpunkte jeweils eine Maske 44 gelegt, beispielsweise in einer Filterkarte. Die Masken 44 können Quadrate, Kreise, Sechsecke und ähnliche geometrische Formen sein. Die Größe der Maske entspricht erneut dem Suchradius r, der auch in der anderen Alternative nach Figur 3 Verwendung findet.

Die Masken 44 werden in der Filterkarte ODER-verknüpft. Dadurch entsteht, wie in Figur 4 rechts gezeigt, der relevante Suchbereich oder das Umfeld 38. In dem Umfeld 38 werden fein erfasste Objekte 34 analog gesucht und bearbeitet wie zu Figur 3 beschrieben. Es ist auch denkbar, zuvor das Umfeld 38 zu vereinfachen, beispielsweise durch einen umschreibenden Polygonzug.

Durch die Masken 44 wird der umgebende Bereich lokal, d.h. bildpunktweise aufgebaut, was aufwändiger ist als eine einmalige Festlegung des Umfelds 38 wie nach Figur 3. Dafür wird im Gegenzug die Kontur des grob erfassten Objekts 32 genauer nachgebildet. Die beiden Vorgehensalternativen nach Figur 3 und 4 sind beispielhaft. Es stehen noch eine Reihe weiterer Möglichkeiten wie beispielsweise umschreibende Polygone oder aufwändige Clusterverfahren zur Verfügung.

Bei der Festlegung des Umfelds 38 wurde jeweils mit einem Suchradius r gearbeitet. Dies wird in Figur 5 noch einmal illustriert. Um eine möglichst hohe Verfügbarkeit zu erzielen, sollte der Suchradius minimiert werden, da alle Objekte in dem durch r bestimmten Umfeld 38 betrachtet werden müssen. Diese Minimierung muss zugleich die relevanten Sicherheitsnormen beachten. In der IEC/TS 61496-4-3 sind im Annex AA Vorgaben zur Bestimmung des Sicherheitsabstandes enthalten. Der Sicherheitsabstand bestimmt sich zu

$$S_0 = (K \times T) + C + C_{tz} + d$$

mit

$S_0$ minimaler Sicherheitsabstand zur Gefahrenstelle
$C$ Zuschlag in Abhängigkeit vom Detektionsvermögen, $C = f(d)$
$C_{tz}$ Zuschlag für Systemtoleranzen
$d$ Detektionsvermögen
$K \times T$ Term der Bewegung

Es ergibt sich für das grobe Detektionsvermögen

$$S_1 = (K \times T) + C_1 + C_{tz} + d1$$

und entsprechend für das feine Detektionsvermögen

$$S_2 = (K \times T) + C_2 + C_{tz} + d2$$

Der Term der Bewegung $K \times T$ kann für die Bestimmung des Suchradius r eliminiert werden, da es nicht um das Erreichen der Gefahrstelle 26 und den Sicherheitsabstand dazu geht, sondern um die Ableitung eines Suchradius in einer Momentaufnahme.
Für S gilt somit allgemein

$$S = C + C_{tz} + d$$

Die Norm geht davon aus, dass der Sicherheitsabstand ein d beinhaltet, um den Sensor auszulösen. Da jedoch jeweils der äußere Rand gesucht ist, entfällt dieses d.
Zur weiteren Vereinfachung kann der Messfehler, also der Zuschlag für Systemtoleranzen, für beide Detektionsvermögen als gleich angenommen werden und es verbleibt

$$S_1 = C_1$$

$$S_2 = C_2.$$

Damit berechnet sich der Suchradius zu

$$r = C_1 - C_2.$$

C ist entsprechend der Normung in Abhängigkeit des Detektionsvermögens anzusetzen. Beispielsweise ist für ein von feines Detektionsvermögen von 55 mm und ein grobes Detektionsvermögen von mehr als 70 mm der minimale Suchradius r=462 mm.
Abschließend folgen noch einige Bemerkungen zu einem Randproblem. Grundsätzlich lässt sich die Erfindung mit herkömmlichen Schutzfeldern 28 anwenden. Dabei stellt aber der Rand eines überwachten Schutzbereiches eine Schwierigkeit dar, da die Grenzen des minimalen Sicherheitsabstandes eines Schutzfeldes 28 eine Abhängigkeit von Detektionsvermögen haben. Dieser ist für feine Detektionsvermögen geringer als für gröbere. Man möchte nun aber den Vorteil, auf Grundlage eines groben Detektionsvermögens über die Relevanz von detektierten Objekten im feinen Detektionsvermögen zu entscheiden, nicht aufgeben. Dies kann sehr einfach gelöst werden, indem der äußere Rand für die Auswertung mit dem groben Detektionsvermögen minimal um den Suchradius zuzüglich des groben und abzüglich des feinen Detektionsvermögens erweitert wird: Erweiterung = $r + d_1 - d_2$. Ein Schutzfeld 28 des groben Detektionsvermögens ist somit mindestens so groß wie ein Schutzfeld 28 des feinen Detektionsvermögens. Ein Stopp der Maschine erfolgt auf Grund einer relevanten Objektdetektion im Schutzfeld 28 des feinen Detektionsvermögens.

**Patentansprüche**

1. Optoelektronischer 3D-Sensor (10) für den Personenschutz zur sicheren Erkennung von Objekten (32, 34) einer Mindestgröße in einem Überwachungsbereich (12) mit einem Bildsensor (16a-b) zum Erfassen von dreidimensionalen Bilddaten des Überwachungsbereichs (12) und mit einer Auswertungseinheit (24), die dafür ausgebildet ist, in den Bilddaten mit einem Detektionsvermögen Objekte (32, 34) zu erfassen und zur Überwachung einer Gefahrenstelle (26) bei unzulässigem Eingriff in ein Schutzfeld (28) oder einem zu nahe an der Gefahrenstelle (26) befindlichen Objekt (32, 34) ein sicherheitsgerichtetes Absicherungssignal auszulösen, wobei das Detektionsvermögen angibt, Objekte welcher Mindestabmessungen sicher erkannt werden, **dadurch gekennzeichnet,**
**dass** die Auswertungseinheit (24) weiter dafür ausgebildet ist, in den Bilddaten sowohl mit einem feinen Detektionsvermögen fein erfasste Objekte (34, 36) als auch mit einem groben Detektionsvermögen, das gröber ist als das feine Detektionsvermögen, grob erfasste Objekte (32) zu erkennen und solche fein erfassten Objekte (36) zu ignorieren, die nicht in einer Umgebung (38) eines grob erfassten Objekts (32) liegen.

2. Sensor (10) nach Anspruch 1,
wobei die Auswertungseinheit (24) dafür ausgebildet ist, ein gemeinsames Objekt (42) aus einem grob erfassten Objekt (32) und den fein erfassten Objekten (34) in dessen Umgebung (38) zu bilden.

3. Sensor (10) nach Anspruch 1 oder 2,
wobei der Sensor (10) eine 3D-Kamera ist, die mit Hilfe ihres Bildsensors (16a-b) als Bilddaten eine Tiefenkarte erfasst.

4. Sensor (10) nach einem der vorherigen Ansprüche,
wobei das feine Detektionsvermögen eine Beinerkennung, eine Armerkennung, eine Handerkennung oder eine Fingererkennung und das grobe Detektionsvermögen eine Körpererkennung, eine Beinerkennung oder eine Armerkennung ermöglicht.

5. Sensor (10) nach einem der vorherigen Ansprüche,
wobei das feine Detektionsvermögen 14 mm, 20 mm, 40 mm oder 55 mm und das grobe Detektionsvermögen 70 mm, 120 mm, 150 mm oder 200 mm beträgt.

6. Sensor (10) nach einem der vorherigen Ansprüche,
wobei die Auswertungseinheit (24) beim Auffinden fein erfasster Objekt (34) in der Umgebung (38) eines grob erfassten Objekts (32) zunächst eine umschreibende geometrische Form (40) um das grob erfasste Objekt (32) legt und dann für die fein erfassten Objekte (34) einen Suchbereich (38) mit einem festgelegten Abstand (r) um die geometrische Form (40) als Umgebung (38) bestimmt.

7. Sensor (10) nach einem der Ansprüche 1 bis 5,
wobei die Auswertungseinheit (24) beim Auffinden fein erfasster Objekte (34) in der Umgebung (38) eines grob erfassten Objekts (32) eine Maske (44) mit einer geometrischen Form mit der Größe eines festgelegten Abstands (r) um jeden Bildpunkt des grob erfassten Objekts (32) legt und so die Summe der Masken (44) die Umgebung (38) bestimmt.

8. Sensor (10) nach Anspruch 6 oder 7,
wobei die geometrische Form ein Kreis, ein Rechteck, ein Sechseck oder ein anderes Polygon ist.

9. Sensor (10) nach einem der Ansprüche 6 bis 8,
wobei der festgelegte Abstand (r) aus den Sicherheitszuschlägen ($C_1$, $C_2$) in Abhängigkeit vom Detektionsvermögen im Sinne sicherheitstechnischer Normen, insbesondere der ISO 13855 und der IEC 61496-4-3 beziehungsweise deren jeweils anzuwendender Entsprechung abgeleitet ist.

10. Sensor (10) nach Anspruch 9,

wobei der festgelegte Abstand (r) aus der Differenz des Sicherheitszuschlags ($C_1$) in Abhängigkeit des groben Detektionsvermögens minus den Sicherheitszuschlag ($C_2$) in Abhängigkeit des feinen Detektionsvermögens abgeleitet ist.

11. Sensor (10) nach einem der vorhergehenden Ansprüche,
wobei die Auswertungseinheit (24) weiterhin dafür ausgebildet ist zu prüfen, ob ein erfasstes Objekt (32, 34, 42) sich in einem vorgegebenen Schutzfeld (28) oder zu nahe an einer Gefahrenstelle (26) befindet und in diesem Fall ein sicherheitsgerichtetes Absicherungssignal über einen Sicherheitsausgang (30) auszugeben.

12. Sensor (10) nach Anspruch 11,
wobei die Auswertungseinheit (24) für das grobe und feine Detektionsvermögen unterschiedliche Schutzfelder (28) prüft, indem das Schutzfeld (28) für das grobe Detektionsvermögen um eine Sicherheitserweiterung vergrößert ist.

13. Verfahren für den Personenschutz zur sicheren Erkennung von Objekten (32, 34) einer Mindestgröße in einem Überwachungsbereich (12) und zur Überwachung einer Gefahrenstelle (26), bei dem dreidimensionale Bilddaten des Überwachungsbereichs (12) erfasst und ausgewertet werden, um in den Bilddaten mit einem Detektionsvermögen Objekte (32, 34) zu erfassen, wobei bei unzulässigem Eingriff in ein Schutzfeld (28) oder einem zu nahe an der Gefahrenstelle (26) befindlichen Objekt (32, 34) ein sicherheitsgerichtetes Absicherungssignal ausgelöst wird und wobei das Detektionsvermögen angibt, Objekte welcher Mindestabmessungen sicher erkannt werden,
**dadurch gekennzeichnet,**
**dass** in den Bilddaten sowohl mit einem feinen Detektionsvermögen fein erfasste Objekte (34, 36) als auch mit einem groben Detektionsvermögen, das gröber ist als das feine Detektionsvermögen, grob erfasste Objekte (32) erkannt und solche fein erfassten Objekte (36) ignoriert werden, die nicht in einer Umgebung eines grob erfassten Objekts (32) liegen.

14. Verfahren nach Anspruch 13,
wobei aus einem grob erfassten Objekt (32) und den fein erfassten Objekten (34) in dessen Umgebung (38) ein gemeinsames Objekt (40) erzeugt und geprüft wird, ob das gemeinsame Objekt (40) in ein Schutzfeld (28) eingreift oder sich zu nahe an einem Gefahrenbereich (26) befindet.

15. Verfahren nach Anspruch 13 oder 14,
wobei die Umgebung (38) durch einen festgelegten Abstand (r) zu jedem Bildpunkt eines grob erfassten Objekts (32) oder zu einer umschreibenden geometrischen Form (40) um das grob erfasste Objekt (32) festgelegt ist, und wobei insbesondere der festgelegte Abstand (r) aus den Sicherheitszuschlägen ($C_1$, $C_2$) in Abhängigkeit vom Detektionsvermögen im Sinne sicherheitstechnischer Normen abgeleitet ist.

**Claims**

1. An optoelectronic 3D sensor (10) for personal protection for safe detection of objects (32, 34) of a minimum size in a monitored area (12), the sensor (10) having an image sensor (16a-b) for recording three-dimensional image data of the monitored area (12) and having an evaluation unit (24) configured to detect objects (32, 34) in the image data with a detection capability and, for monitoring a danger area (26), to trigger a safety-related safeguarding signal in the event of impermissible intrusion into a protective field (28) or an object (32, 34) located too close to the danger area (26), the detection capability indicating objects of which minimum dimensions are reliably detected,
**characterized in that** the evaluation unit (24) is further configured to detect in the image data both objects (34, 36) finely detected with a fine detection capability and objects (32) coarsely detected with a coarse detection capability coarser than the fine detection capability and to ignore those finely detected objects (36) that are not located in a vicinity (38) of a coarsely detected object (32).

2. The sensor (10) according to claim 1, wherein the evaluation unit (24) is configured to form a common object (42) from a coarsely detected object (32) and the finely detected objects (34) in its vicinity (38).

3. The sensor (10) according to claim 1 or 2, wherein the sensor (10) is a 3D camera that captures a depth map as image data by means of its image sensor (16a-b).

4. The sensor (10) according to any of the preceding claims, wherein the fine detection capability enables leg detection, arm detection, hand detection, or finger detection, and the coarse detection capability enables body detection, leg detection, or arm detection.

5. The sensor (10) according to any of the preceding claims, wherein the fine detection capability is 14 mm, 20 mm, 40 mm or 55 mm and the coarse detection capability is 70 mm, 120 mm, 150 mm or 200 mm.

6. The sensor (10) according to any of the preceding claims, wherein the evaluation unit (24), upon detecting finely detected objects (34) in the vicinity (38) of a coarsely detected object (32), first places a circumscribing geometric shape (40) around the coarsely detected object (32) and then determines a search area (38) for the finely detected objects (34) with a defined distance (r) around the geometric shape (40) as the vicinity (38).

7. The sensor (10) according to any of claims 1 to 5, wherein the evaluation unit (24), upon detecting finely detected objects (34) in the vicinity (38) of a coarsely detected object (32), places a mask (44) having a geometric shape with the size of a defined distance (r) around each pixel of the coarsely detected object (32) and thus the sum of the masks (44) determines the vicinity (38).

8. The sensor (10) according to claim 6 or 7, wherein the geometric shape is a circle, rectangle, hexagon or other polygon.

9. The sensor (10) according to any of claims 6 to 8, wherein the defined distance (r) is derived from the safety allowances ($C_1$, $C_2$) as a function of the detection capability in the sense of safety standards, in particular ISO 13855 and IEC 61496-4-3 or their respective applicable equivalents.

10. The sensor (10) according to claim 9, wherein the defined distance (r) is derived from the difference of the safety margin ($C_1$) depending on the coarse detection capability minus the safety margin ($C_2$) depending on the fine detection capability.

11. The sensor (10) according to any of the preceding claims, wherein the evaluation unit (24) is further configured to check whether a detected object (32, 34, 42) is located in a predetermined protective field (28) or too close to a danger area (26) and, in this case, to output a safety-related safeguarding signal via a safety output (30).

12. The sensor (10) according to claim 11, wherein the evaluation unit (24) checks different protective fields (28) for the coarse and fine detection capability in that the protective field (28) for the coarse detection capability is enlarged by a safety extension.

13. A method for personal protection for the safe detection of objects (32, 34) of a minimum size in a monitored area (12) and for monitoring a danger area (26), wherein three-dimensional image data of the monitored area (12) are detected and evaluated in order to detect objects (32, 34) in the image data with a detection capability, wherein in the event of impermissible intrusion into a protective field (28) or an object (32, 34) located too close to the danger area (26) a safety-related safeguarding signal is triggered, and wherein the detection capability indicates objects of which minimum dimensions are reliably detected, **characterized in that** both objects (34, 36) finely detected with a fine detection capability and objects (32) coarsely detected with a coarse detection capability coarser than the fine detection capability are detected in the image data, and those finely detected objects (36) that are not located in a vicinity of a coarsely detected object (32) are ignored.

14. The method according to claim 13, wherein a common object (40) is generated from a coarsely detected object (32) and the finely detected objects (34) in its vicinity (38), and a check is made to determine whether the common object (40) intrudes into a protective field (28) or is too close to a danger area (26).

15. The method according to claim 13 or 14, wherein the vicinity (38) is defined by a defined distance (r) to each pixel of a coarsely detected object (32) or to a circumscribing geometric shape (40) around the coarsely detected object (32), and wherein in particular the defined distance (r) is derived from the safety allowances ($C_1$, $C_2$) as a function of the detection capability in the sense of safety-related standards.

**Revendications**

1. Capteur optoélectronique 3D (10) pour la protection des personnes pour la détection sûre d'objets (32, 34) d'une dimension minimale dans une zone surveillée (12), avec un capteur d'images (16a- b) pour l'enregistrement de données d'images tridimensionnelles de la zone surveillée (12) et avec une unité d'évaluation (24) configurée pour détecter des objets (32, 34) dans les données d'image avec une capacité de détection et, pour la surveillance d'une zone de danger (26), pour le déclenchement d'un signal de sécurité en cas d'intrusion non autorisée dans un champ de protection (28) ou d'un objet (32, 34) situé trop près de la zone de danger (26), la capacité de détection indiquant des objets dont les dimensions minimales sont détectées de manière fiable, **caractérisé en ce que** l'unité d'évaluation (24) est en outre configurée pour détecter dans les données d'image aussi bien des objets (34, 36) détectés finement avec une capacité de détection fine que des objets (32) détectés grossièrement avec une capacité de détection grossière plus grossière que la capacité de détection fine et pour ignorer les objets (36) détectés finement qui ne se trouvent pas au voisinage (38) d'un objet (32) détecté grossièrement.

2. Capteur (10) selon la revendication 1, dans lequel l'unité d'évaluation (24) est configurée pour former un objet commun (42) à partir d'un objet détecté grossièrement (32) et des objets détectés finement (34) dans son voisinage (38).

3. Capteur (10) selon la revendication 1 ou 2, dans lequel le capteur (10) est une caméra 3D qui capture une carte de profondeur en tant que données d'image au moyen de son capteur d'image (16a- b).

4. Capteur (10) selon l'une des revendications précédentes, dans lequel la capacité de détection fine permet une détection de jambe, une détection de bras, une détection de main ou une détection de doigt, et la capacité de détection grossière permet une détection de corps, une détection de jambe ou une détection de bras.

5. Capteur (10) selon l'une des revendications précédentes, dans lequel la capacité de détection fine est de 14 mm, 20 mm, 40 mm ou 55 mm et la capacité de détection grossière est de 70 mm, 120 mm, 150 mm ou 200 mm.

6. Capteur (10) selon l'une des revendications précédentes, dans lequel l'unité d'évaluation (24), lors de la détection d'objets finement détectés (34) dans le voisinage (38) d'un objet grossièrement détecté (32), place d'abord une forme géométrique (40) circonscrite autour de l'objet grossièrement détecté (32) et détermine ensuite une zone de recherche (38) pour les objets finement détectés (34) avec une distance définie (r) autour de la forme géométrique (40) comme voisinage (38).

7. Capteur (10) selon l'une des revendications 1 à 5, dans lequel l'unité d'évaluation (24), lors de la détection d'objets finement détectés (34) dans le voisinage (38) d'un objet grossièrement détecté (32), place un masque (44) ayant une forme géométrique avec la taille d'une distance définie (r) autour de chaque pixel de l'objet grossièrement détecté (32) et ainsi la somme des masques (44) détermine le voisinage (38).

8. Capteur (10) selon la revendication 6 ou 7, dans lequel la forme géométrique est un cercle, un rectangle, un hexagone ou un autre polygone.

**9.** Capteur (10) selon l'une des revendications 6 à 8, dans lequel la distance définie (r) est dérivée des marges de sécurité ($C_1$, $C_2$) en fonction de la capacité de détection au sens des normes de sécurité, notamment ISO 13855 et IEC 61496-4-3 ou leurs équivalents respectifs applicables.

**10.** Capteur (10) selon la revendication 9, dans lequel la distance définie (r) est dérivée de la différence entre la marge de sécurité ($C_1$) dépendant de la capacité de détection grossière moins la marge de sécurité ($C_2$) dépendant de la capacité de détection fine.

**11.** Capteur (10) selon l'une des revendications précédentes, dans lequel l'unité d'évaluation (24) est en outre configurée pour vérifier si un objet détecté (32, 34, 42) se trouve dans un champ de protection prédéterminé (28) ou trop près d'une zone dangereuse (26) et, dans ce cas, pour délivrer un signal de sécurité par le biais d'une sortie de sécurité (30).

**12.** Capteur (10) selon la revendication 11, dans lequel l'unité d'évaluation (24) vérifie différents champs de protection (28) pour la capacité de détection grossière et fine en ce que le champ de protection (28) pour la capacité de détection grossière est élargi d'une extension de sécurité.

**13.** Procédé pour la protection des personnes pour la détection sûre d'objets (32, 34) d'une dimension minimale dans une zone surveillée (12) et pour la surveillance d'une zone dangereuse (26), dans lequel des données d'image tridimensionnelles de la zone surveillée (12) sont détectées et évaluées pour détecter des objets (32, 34) dans les données d'image avec une capacité de détection, un signal de sécurité étant déclenché en cas d'intrusion non autorisée dans un champ de protection (28) ou d'un objet (32, 34) situé trop près de la zone dangereuse (26), et dans lequel la capacité de détection indique des objets dont les dimensions minimales sont détectées de manière fiable, **caractérisé en ce qu'**aussi bien des objets (34, 36) détectés finement avec une capacité de détection fine que des objets (32) détectés grossièrement avec une capacité de détection grossière plus grossière que la capacité de détection fine sont détectés dans les données d'image, et les objets (36) détectés finement qui ne se trouvent pas à proximité d'un objet (32) détecté grossièrement sont ignorés.

**14.** Procédé selon la revendication 13, dans lequel un objet commun (40) est généré à partir d'un objet grossièrement détecté (32) et des objets finement détectés (34) dans son voisinage (38), et un contrôle est effectué pour déterminer si l'objet commun (40) fait intrusion dans un champ de protection (28) ou est trop proche d'une zone dangereuse (26).

**15.** Procédé selon la revendication 13 ou 14, dans lequel le voisinage (38) est défini par une distance définie (r) par rapport à chaque pixel d'un objet grossièrement détecté (32) ou par rapport à une forme géométrique circonscrite (40) autour de l'objet grossièrement détecté (32), et dans lequel en particulier la distance définie (r) est dérivée des marges de sécurité ($C_1$, $C_2$) en fonction de la capacité de détection au sens des normes relatives à la sécurité.

Figur 1

## Figur 2

## Figur 3a

## Figur 3b

## Figur 3c

## Figur 3d

Figur 4

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2275990 B1
- EP 2819109 A1

- EP 2426576 A2